# EUROPEAN PATENT APPLICATION

(11) **EP 2 667 588 A2**
(43) Date of publication of application: **27.11.2013**
(21) Application number: 12173924.7
(22) Date of filing: 27.06.2012
(51) Int. Cl.: H04N 5/33

(54) **Night vision image capturing apparatus and infrared radiating apparatus and night vision image capturing system**

(30) Priority: 22.05.2012 JP 2012116569
(71) Applicant: Fujitsu General Limited, Kawasaki-shi Kanagawa 213-8502 (JP)
(72) Inventor: Ban, Shinji, Kawasaki-shi, Kanagawa 213-8502 (JP)
(74) Representative: Winter, Brandl, Fürniss, Hübner, Röss, Kaiser, Polte - Partnerschaft

(57) **Abstract**

An imaging device (31) includes pixels (32, 33, 34) configured to sequentially output image signals for an infrared radiation (14a) having a first wavelength, an infrared radiation (14b) having a second wavelength and an infrared radiation (14c) having a third wavelength. A first pixel (32) has the sensitivity to a first color of a primary color and outputting a first signal in response to reception of the infrared radiation (14a) having the shortest wavelength of the first wavelength, the second wavelength and the third wavelength. A second pixel (34) has the sensitivity to a second color of the primary color and outputting a second signal in response to the reception of the infrared radiation (14a) having the shortest wavelength. A discriminating circuit (39) is configured to compare the first signal and the second signal with each other to discriminate a reception timing of an infrared radiation (14a) having a selected wavelength in response to a relative sensitivity ratio.

## Description

The present invention relates to a night vision image capturing system, and a night vision image capturing apparatus and an infrared radiating apparatus employed in the night vision image capturing system.

Japanese Patent Application Publication No. 2011-50049 discloses a night vision image capturing system capable of reproducing color images having a natural tone. The night vision image capturing system includes an infrared radiating apparatus and a night vision image capturing apparatus. The infrared radiating apparatus emits an infrared radiation having a first wavelength, an infrared radiation having a second wavelength and an infrared radiation having a third wavelength, for example, toward an object. The night vision image capturing apparatus captures images for the respective infrared radiations. The intensity distribution of the infrared radiation can be obtained for the individual images. Red (R), green (G) and blue (B) are respectively assigned to the individual images as display colors. The superimposition of the intensity distributions of the assigned display colors results in a quasi color image having a natural tone.

In the case where the emissions of the infrared radiations respectively having the first wavelength, the second wavelength and the third wavelength are switched over one another in the night vision image capturing system, the respective display colors should be assigned to the infrared radiations respectively having the first wavelength, the second wavelength and the third wavelength. Accordingly, the wavelength of the infrared radiation should be identified for the individual images. A control line is connected between the infrared radiating apparatus and the night vision image capturing apparatus to identify the wavelength of the infrared radiation. If the infrared radiating apparatus and the night vision image capturing apparatus are placed at remote locations from each other, a long control line is required. This results in a restricted installation and a restricted arrangement.

One aspect of the present invention may contribute to omission of a control line directly connecting an infrared radiating apparatus and a night vision image capturing apparatus to each other.

According to an aspect of the invention, there is provided a night vision image capturing apparatus comprising: an imaging device including pixels configured to sequentially receive an infrared radiation having a first wavelength, an infrared radiation having a second wavelength and an infrared radiation having a third wavelength and to output an image signal for the infrared radiation having the first wavelength, an image signal for the infrared radiation having the second wavelength and an image signal for the infrared radiation having the third wavelength, the pixels including a first pixel and a second pixel, the first pixel having sensitivity to a first color of a primary color and outputting a first signal in response to reception of the infrared radiation having a shortest wavelength of the first wavelength, the second wavelength and the third wavelength, the second pixel having sensitivity to a second color of the primary color and outputting a second signal in response to the reception of the infrared radiation having the shortest wavelength; and a discriminating circuit configured to compare the first signal and the second signal with each other to discriminate a reception timing of an infrared radiation having a selected wavelength among the first wavelength, the second wavelength and the third wavelength in response to a relative sensitivity ratio.

The imaging device captures an image of the infrared radiation for the respective wavelengths that are switched over. An intensity distribution of the infrared radiation can be obtained for the individual image. Specific display colors can be assigned to the respective wavelengths. The superimposition of the intensity distributions of the assigned display colors results in a quasi color image having a natural tone.

The inventor has observed a change in the relative sensitivity ratio between the first signal and the second signal depending on the wavelength of the infrared radiations. Accordingly, when the relative sensitivity ratio between the first signal and the second signal exceeds the predetermined threshold at the infrared discriminating circuit, the reception timing can be discriminated for the infrared radiation having the selected wavelength. Since the infrared radiation having the first wavelength, the infrared radiation having the second wavelength and the infrared radiation having the third wavelength are received in the predetermined sequence, the discrimination of the reception timing of the infrared radiation having the selected wavelength results in determination of the reception timings for all the infrared radiations. Even when a direct control line is omitted between an infrared radiating apparatus and the night vision image capturing apparatus, the red color, the blue color and the green color can reliably be assigned to the images of the infrared radiation having the first wavelength, the images of the infrared radiation having the second wavelength and the images of the infrared radiation having the third wavelength, respectively.

The night vision image capturing apparatus may further comprise: a controlling circuit configured to supply a driving signal to the imaging device based on electric power having a predetermined frequency supplied from a commercial power supply; and an image synthesis processing circuit configured to assign display colors to the image signals in a predetermined sequence in a manner synchronized with the predetermined frequency of the electric power. The commercial power supply enables the supply of the electric power of the identical phase not only to the night vision image capturing apparatus but also to the infrared radiating apparatus. The capturing timings of the infrared radiations can be synchronized with the switchover of the infrared radiations having the different wavelengths. Synchronization can be accomplished without a direct control line between the infrared radiating apparatus and the night vision image capturing apparatus. Accordingly, the infrared radiating apparatus and the night vision image capturing apparatus can be placed at remote locations from each other without any restrictions for installation and arrangements.

Red may be assigned as one of the display colors to the image signal for the infrared radiation having the first wavelength, blue may be assigned as one of the display colors to the image signal for the infrared radiation having the second wavelength longer than the first wavelength, and green may be assigned as one of the display colors to the image signal for the infrared radiation having the third wavelength longer than the second wavelength. These assignments contribute to generation of color images in a natural tone as compared with the other sets of assignments.

The first color may be red and the second color may be blue or green. When the wavelength of the infrared radiation is relatively short, the relative sensitivity ratio is large between the output of the first pixel corresponding to the red color and the output of the second pixel corresponding to the blue or green color. On the other hand, as the wavelength of the infrared radiation gets longer, the outputs of the pixels corresponding to the primary color get equal to one another. Specifically, the relative sensitivity ratio gets closer to "1". Accordingly, the comparison between the red color and the blue or green color enables a reliable discrimination of the reception timing of the infrared radiation having the selected wavelength.

According to another aspect of the invention, there is provide a night vision image capturing system comprising: an infrared radiating apparatus; and a night vision image capturing apparatus, wherein the infrared radiating apparatus includes: a first illuminant emitting an infrared radiation having a first wavelength; a second illuminant emitting an infrared radiation having a second wavelength; a third illuminant emitting an infrared radiation having a third wavelength; and a controller circuit configured to switch over emissions of the infrared radiation having the first wavelength, the infrared radiation having the second wavelength and the infrared radiation having the third wavelength in a predetermined sequence in a manner synchronized with a frequency signal having a predetermined frequency, wherein the night vision image capturing apparatus includes: an imaging device including pixels configured to sequentially receive the infrared radiation having the first wavelength, the infrared radiation having the second wavelength and the infrared radiation having the third wavelength in a manner synchronized with the frequency signal having the predetermined frequency and to output an image signal for the infrared radiation having the first wavelength, an image signal for the infrared radiation having the second wavelength and an image signal for the infrared radiation having the third wavelength, the pixels including a first pixel and a second pixel, the first pixel having sensitivity to a first color of a primary color and outputting a first signal in response to reception of the infrared radiation having a shortest wavelength of the first wavelength, the second wavelength and the third wavelength, the second pixel having sensitivity to a second color of the primary color and outputting a second signal in response to the reception of the infrared radiation having the shortest wavelength; and a discriminating circuit configured to compare the first signal and the second signal with each other to discriminate a reception timing of an infrared radiation having a selected wavelength among the first wavelength, the second wavelength and the third wavelength in response to a relative sensitivity ratio.

The infrared radiating apparatus is capable of emitting the infrared radiation having the first wavelength, the infrared radiation having the second wavelength and the infrared radiation having the third wavelength in the predetermined sequence at predetermined periods. The imaging device is capable of capturing an image of the infrared radiation for the respective wavelengths that are switched over. An intensity distribution of the infrared radiation can be obtained for the individual image. Specific display colors can be assigned to the respective wavelengths. The superimposition of the intensity distributions of the assigned display colors results in a quasi color image having a natural tone.

When the relative sensitivity ratio is determined between the first signal and the second signal at the discriminating circuit, the reception timing can be discriminated for the infrared radiation having the selected wavelength depending on the relative sensitivity ratio. Since the infrared radiations having the different wavelengths are received in the predetermined sequence, the discrimination of the reception timing of the infrared radiation having the selected wavelength results in determination of the reception timings for all the infrared radiations. Even when a direct control line is omitted between the infrared radiating apparatus and the night vision image capturing apparatus, Specific display colors can reliably be assigned to the respective wavelengths.

According to still another aspect of the invention, there is provide an infrared radiating apparatus comprising: a first illuminant emitting an infrared radiation having a first wavelength; a second illuminant emitting an infrared radiation having a second wavelength; a third illuminant emitting an infrared radiation having a third wavelength; and a controller circuit configured to switch over emissions of the infrared radiation having the first wavelength, the infrared radiation having the second wavelength and the infrared radiation having the third wavelength in a predetermined sequence in a manner synchronized with a frequency signal having a predetermined frequency. The infrared radiating apparatus is capable of emitting the infrared radiation having the first wavelength, the infrared radiation having the second wavelength and the infrared radiation having the third wavelength in the predetermined sequence at predetermined periods.

The infrared radiating apparatus may further comprise a driver circuit configured to supply driving signals, respectively, to the first illuminant, the second illuminant and the third illuminant based on electric power as the frequency signal supplied from a commercial power supply. The commercial power supply enables the supply of the electric power of the identical phase not only to the night vision image capturing apparatus but also to the infrared radiating apparatus. The capturing timings of the infrared radiations can be synchronized with the switchover of the infrared radiations having the different wavelengths. Synchronization can be accomplished without a direct control line between the infrared radiating apparatus and the night vision image capturing apparatus. Accordingly, the infrared radiating apparatus and the night vision image capturing apparatus can be placed at remote locations from each other without any restrictions for installation and arrangements.

The object and advantages of the embodiment will be realized and attained by means of the elements and combinations particularly pointed out in the appended claims. It is to be understood that both the foregoing general description and the following detailed description are exemplary and explanatory and are not restrictive of the embodiment, as claimed.
Fig. 1 is a block diagram schematically illustrating the structure of a night vision image capturing system according to one embodiment;
Fig. 2 is a graph illustrating the relative sensitivity of the red color pixel, the green color pixel and the blue color pixel to infrared radiations; and
Fig. 3 is a timing chart schematically illustrating the timing of the action of the night vision image capturing system.

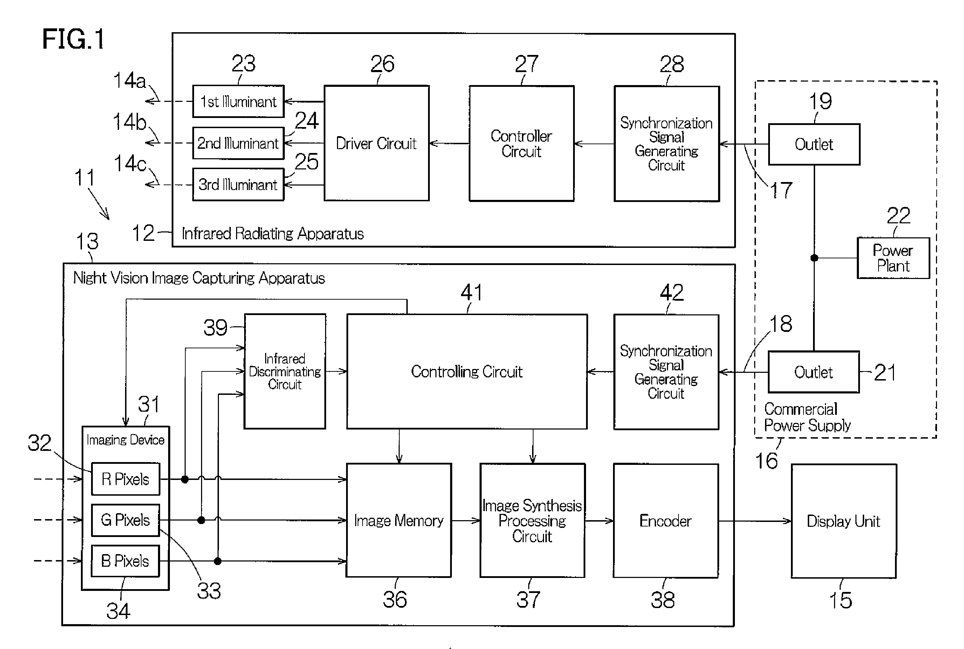

FIG. 1 schematically illustrates a night vision image capturing system 11 according to one embodiment. The night vision image capturing system 11 includes an infrared radiating apparatus 12 and a night vision image capturing apparatus 13. The infrared radiating apparatus 12 emits, toward an object, an infrared radiation 14a having a first wavelength, an infrared radiation 14b having a second wavelength and an infrared radiation 14c having a third wavelength, for example. The night vision image capturing apparatus 13 captures images for the respective infrared radiations 14a, 14b, 14c. The intensity distribution of the infrared radiations 14a, 14b, 14c can be obtained for the individual images. Red (R), green (G) and blue (B) are respectively assigned to the individual images as display colors. Here, red is assigned to the images generated based on the infrared radiation 14a having the first wavelength. Blue is assigned to the images generated based on the infrared radiation 14b having the second wavelength. Green is assigned to the images generated based on the infrared radiation 14c having the third wavelength. The superimposition of the intensity distributions of the assigned display colors results in a quasi color image having a natural tone.

A display unit 15 may be connected to the night vision image capturing apparatus 13. The color image can be displayed on the screen of the display unit 15. Alternatively or additionally, a storage apparatus, not depicted, may be connected to the night vision image capturing apparatus 13. The color image can be stored in the storage apparatus.

The infrared radiating apparatus 12 and the night vision image capturing apparatus 13 are connected to a commercial power supply 16. The infrared radiating apparatus 12 and the night vision image capturing apparatus 13 respectively include power supply cords 17, 18. The plugs of the power supply cords 17, 18 are coupled to outlets 19, 21, respectively. The alternating current is supplied to the outlets 19, 21 from a generator of a power plant 22. The alternating current has a specific frequency such as 50Hz or 60Hz, for example. The infrared radiating apparatus 12 and the night vision image capturing apparatus 13 operate in response to the supply of the alternating current. The alternating current may optionally be converted to the direct current for the operation of the infrared radiation apparatus 12 and the night vision image capturing apparatus 13. In this case, AD/DC circuits, not depicted, may be incorporated in the infrared radiating apparatus 12 and the night vision image capturing apparatus 13. Electric power may be supplied to the outlets 19, 21 from a home generator, for example, in place of the generator of the power plant 22. Otherwise, electric power may be supplied to the outlets 19, 21 from a common generator in any form.

The infrared radiating apparatus 12 includes a first infrared radiation illuminant 23, a second infrared radiation illuminant 24 and a third infrared radiation illuminant 25. The first infrared radiation illuminant 23 is configured to emit the infrared radiation 14a having the first wavelength for the peak intensity. The first wavelength may be set at 780nm, for example. The first infrared radiation illuminant 23 may comprise a light-emitting diode (LED), for example. The second infrared radiation illuminant 24 is configured to emit the infrared radiation 14b having the second wavelength for the peak intensity. The second wavelength is set longer than the first wavelength. The second wavelength may be set at 870nm, for example. The second infrared radiation illuminant 24 may comprise a light-emitting diode (LED), for example. The third infrared radiation illuminant 25 is configured to emit the infrared radiation 14c having the third wavelength for the peak intensity. The third wavelength is set longer than the second wavelength. The third wavelength may be set at 940nm, for example. The third infrared radiation illuminant 25 may comprise a light-emitting diode (LED), for example. The individual infrared radiation illuminants 23, 24, 25 may have the half value width of 40nm, for example.

The infrared radiating apparatus 12 includes a driver circuit 26. The driver circuit 26 is connected to the first infrared radiation illuminant 23, the second infrared radiation illuminant 24 and the third infrared radiation illuminant 25. The driver circuit 26 is configured to supply driving signals to the first infrared radiation illuminant 23, the second infrared radiation illuminant 24 and the third infrared radiation illuminant 25, respectively. The infrared radiations 14a, 14b, 14c are respectively emitted from the first infrared radiation illuminant 23, the second infrared radiation illuminant 24 and the third infrared radiation illuminant 25 toward an object in response to the supply of the driving signals. The driving signals serve to determine the illuminating periods of the first, second and third infrared radiation illuminants 23, 24, 25. While the driving signals are not supplied, the first infrared radiation illuminant 23, the second infrared radiation illuminant 24 and the third infrared radiation illuminant 25 do not emit infrared radiations. The first infrared radiation illuminant 23, the second infrared radiation illuminant 24 and the third infrared radiation illuminant 25 are extinguished. The driving signals may be generated based on the direct current converted from the alternating current. The separate driver circuits 26 may be connected to the first infrared radiation illuminant 23, the second infrared radiation illuminant 24 and the third infrared radiation illuminant 25, respectively.

The infrared radiating apparatus 12 includes a controller circuit 27. The controller circuit 27 is connected to the driver circuit 26. The controller circuit 27 is configured to supply control signals to the driver circuit 26. The controller circuit 27 serves to determine the illuminating period of the first infrared radiation illuminant 23, the illuminating period of the second infrared radiation illuminant 24 and the illuminating period of the third infrared radiation illuminant 25 in a predetermined sequence. The control signals enable the switchover of the emission of the infrared radiations 14a, 14b, 14c from the first infrared radiation illuminant 23, the second infrared radiation illuminant 24 and the third infrared radiation illuminant 25 in the predetermined sequence.

The infrared radiating apparatus 12 includes a synchronization signal generating circuit 28. The synchronization signal generating circuit 28 is connected to the controller circuit 27. The alternating current is supplied to the synchronization signal generating circuit 28 from the outlet 19. The synchronization signal generating circuit 28 is configured to detect the zero crossing point of the alternating voltage. The synchronization signal generating circuit 28 serves to identify the phase of the alternating voltage in response to the detection of the zero crossing point. The synchronization signal generating circuit 28 generates a synchronization signal having a frequency of the alternating voltage in a manner synchronized with the phase of the alternating voltage. The synchronization signal is supplied to the controller circuit 27. The controller circuit 27 switches over the illumination of the first infrared radiation illuminant 23, the second infrared radiation illuminant 24 and the third infrared radiation illuminant 25 in a manner synchronized with the synchronization signal.

The night vision image capturing apparatus 13 includes an imaging device 31. The imaging device 31 includes an array of pixels in a predetermined arrangement. The pixels are categorized in red color pixels (R pixels) 32, green color pixels (G pixels) 33 and blue color pixels (B pixels) 34. The red color pixels 32, the green color pixels 33 and the blue color pixels 34 may be arranged in accordance with the Bayer pattern, for example. The red color pixels 32 have the sensitivity to red of the primary color. The green color pixels 33 have the sensitivity to green of the primary color. The blue color pixels 34 have the sensitivity to blue of the primary color. An on-chip color filter may be formed on the individual pixels to establish the red color pixels 32, the green color pixels 33 and the blue color pixels 34. The individual pixels 32, 33, 34 are configured to output electric voltage corresponding to the intensity of the light or electromagnetic waves in a predetermined frequency band. Any of the pixels 32, 33, 34 has the sensitivity to the infrared radiation, in this case, to a near-infrared radiation. Accordingly, any of the pixels 32, 33, 34 outputs electric voltage in response to the reception of the infrared radiation. The intensity distribution can be detected for the light of the respective frequency bands. The intensity distribution forms an image signal. The imaging device 31 may comprise a solid-state imaging element such as a charge-coupled device (CCD) imaging sensor, a CMOS imaging sensor, and the like. The imaging device 31 is configured to generate images at predetermined periods.

The night vision image capturing apparatus 13 includes an image memory 36. The image memory 36 is connected to the imaging device 31. The image memory 36 is configured to temporarily store image data. The individual image data serves to specify the image generated at the imaging device 31. The image memory 36 is configured to simultaneously hold the image data corresponding to at least three images, as described later in detail.

The night vision image capturing apparatus 13 includes an image synthesis processing circuit 37. The image synthesis processing circuit 37 is connected to the image memory 36. The image synthesis processing circuit 37 is configured to obtain the image data from the image memory 36. The image synthesis processing circuit 37 synthesizes three temporally consecutive images into an image. The display colors are respectively assigned to the individual images in a predetermined sequence. The intensity distribution of the infrared radiation is converted into the intensity distribution of the display color in accordance with a predetermined rule. The rule may be derived from an experiment and/or actual measurements, for example. The conversion rules may be stored in an internal memory of the image synthesis processing circuit 37, for example. Here, red, blue and green line up in this sequence in a single period. Accordingly, the synthesis of three temporally consecutive images results in generation of a color image.

The night vision image capturing apparatus 13 includes an encoder 38. The encoder 38 is connected to the image synthesis processing circuit 37. The image signals are supplied to the encoder 38 from the image synthesis processing circuit 37. The image signals specify color images. The encoder 38 is configured to convert the image signals into the composite signals for displaying equipment. The output signals of the encoder 38 may be supplied to the display unit 15 and/or the storage apparatus, for example.

The night vision image capturing apparatus 13 includes an infrared discriminating circuit 39. The infrared discriminating circuit 39 is connected to the imaging device 31. The output (a "first signal" hereinafter) of the red color pixel 32, the output (a "second signal" hereinafter) of the blue color pixel 34 and the output of the green color pixel 33 are individually supplied to the infrared discriminating circuit 39. The infrared discriminating circuit 39 is configured to compare the first signal and the second signal with each other. The infrared discriminating circuit 39 enables discrimination of an infrared radiation having a specific wavelength, namely the infrared radiation 14a having the first wavelength, based on the ratio of the first signal and the second signal. The first signal and the second signal may be derived from a single one of the red color pixels 32 and a single one of the blue color pixels 34 located side by side, or the same number of the red color pixels 32 and the blue color pixels 34 in a predetermined local area, or the same number of the red color pixels 32 and the blue color pixels 34 in the entire imaging device 31.

The night vision image capturing apparatus 13 includes a controlling circuit 41. The controlling circuit 41 is connected to the imaging device 31, the image memory 36, the image synthesis processing circuit 37 and the infrared discriminating circuit 39. The controlling circuit 41 is configured to supply a driving signal to the imaging device 31. The controlling circuit 41 outputs the vertical synchronizing signal or pulses to the imaging device 31 at predetermined periods. The imaging device 31 captures an image in a manner synchronized with the vertical synchronizing signal. The image memory 36 serves to hold the latest three image data in a manner synchronized with the output of the imaging device 31. The image memory 36 updates the image data every time the imaging device 31 outputs the image signal.

The controlling circuit 41 supplies a control signal to the image synthesis processing circuit 37. The control signal is synchronized with the reception timing of the infrared radiation having a selected wavelength. Here, the control signal is synchronized with the reception timing of the infrared radiation 14a having the first wavelength. The reception timing is determined based on the output of the infrared discriminating circuit 39. The image synthesis processing circuit 37 specifies which is the image resulting from the infrared radiation 14a having the first wavelength among the images stored in the image memory 36. When the image resulting from the infrared radiation 14a having the first wavelength is identified in this manner, the image resulting from the infrared radiation 14b having the second wavelength and the image resulting from the infrared radiation 14c having the third wavelength can sequentially be identified since the infrared radiations 14a, 14b, 14c are emitted in a predetermined sequence.

The night vision image capturing apparatus 13 includes a synchronization signal generating circuit 42. The synchronization signal generating circuit 42 is connected to the controlling circuit 41. The alternating current is supplied to the synchronization signal generating circuit 42 from the outlet 21. The synchronization signal generating circuit 42 is configured to detect the zero crossing point of the alternating voltage. The synchronization signal generating circuit 42 serves to identify the phase of the alternating voltage in response to the detection of the zero crossing point. The synchronization signal generating circuit 42 generates a synchronization signal having a frequency of the alternating voltage in a manner synchronized with the phase of the alternating voltage. The synchronization signal is supplied to the controlling circuit 41. The controlling circuit 41 controls the operation of the imaging device 31, the image memory 36 and the image synthesis processing circuit 37 in a manner synchronized with the synchronization signal.

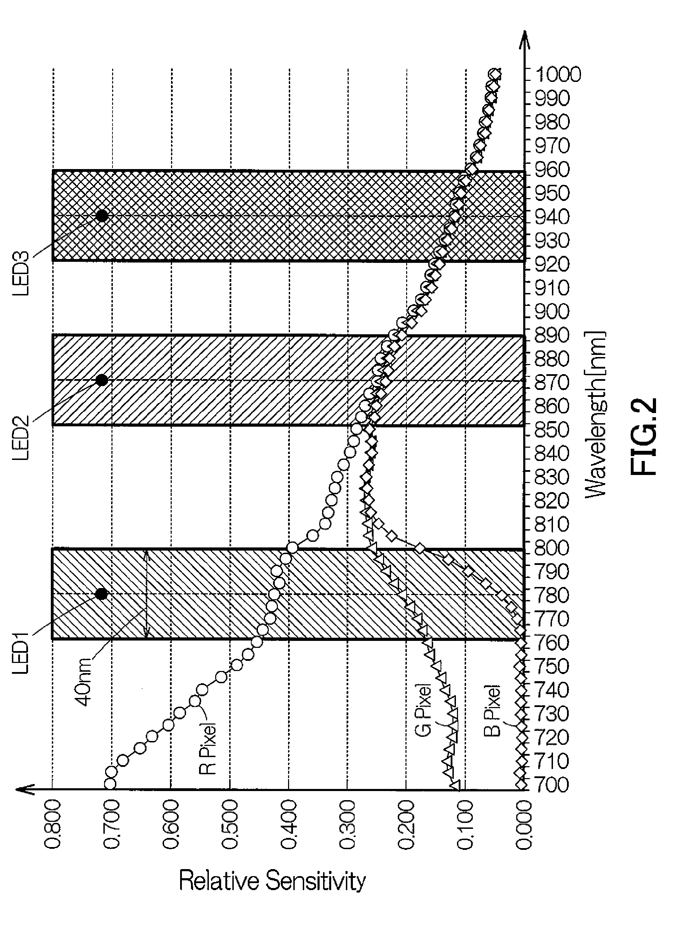

As depicted in FIG. 2, the red color pixels 32, the green color pixels 33 and the blue color pixels 34 have different sensitivity to the infrared radiation depending on the wavelength of the infrared radiation. In particular, the difference of the sensitivity gets larger as the wavelength of the infrared radiation gets shorter. For example, the red color pixels 32 exhibit a higher sensitivity to the infrared radiation 14a having the first wavelength than the green color pixels 33 and the blue color pixels 34 do. On the other hand, the red color pixels 32, the green color pixels 33 and the blue color pixels 34 exhibit a similar sensitivity to the infrared radiation 14b having the second wavelength and the infrared radiation 14c having the third wavelength. Accordingly, when the relative sensitivity ratio between the first signal (the red color pixels 32) and the second signal (the blue color pixels 34) exceeds a predetermined value such that the ratio of the sensitivity to the first signal to the sensitivity to the second signal becomes equal to or larger than "2", for example, the corresponding image can be discriminated as an image resulting from the infrared radiation 14a having the first wavelength. When the relative sensitivity ratio between the first signal and the second signal is close to "1 ", the corresponding image can be discriminated as images resulting from the infrared radiation 14b, 14c having the second or third wavelength. The output to the green color pixels 33 may be employed as the second signal in place of the blue color pixels 34.

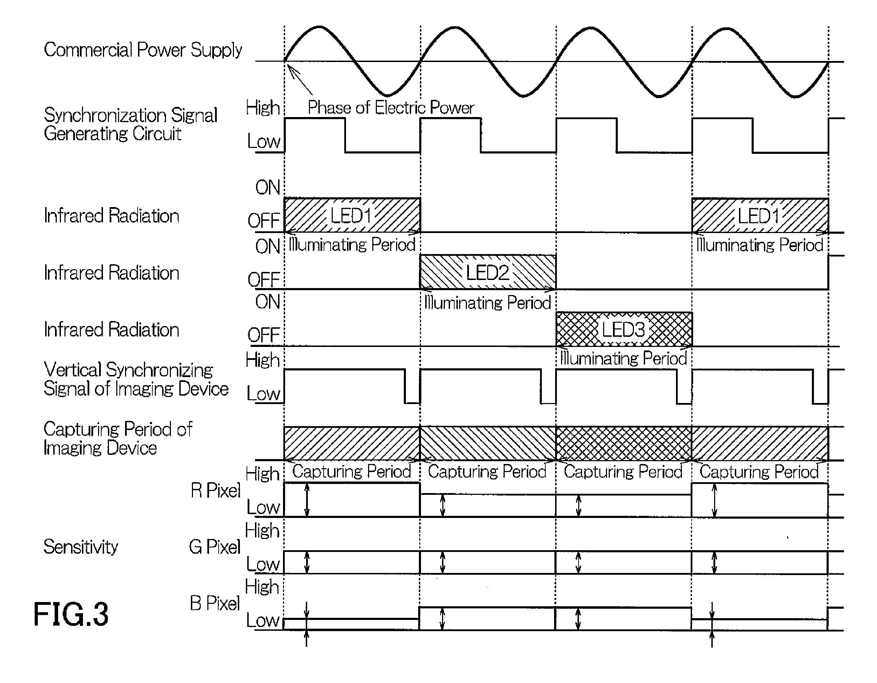

Next, description will be made on the operation of the night vision image capturing system 11. As depicted in FIG. 3, the infrared radiating apparatus 12 sequentially switches over the illumination of the first infrared radiation illuminant (LED1) 23, the second infrared radiation illuminant (LED2) 24 and the third infrared radiation illuminant (LED3). An object is sequentially irradiated with the infrared radiation 14a having the first wavelength, the infrared radiation 14b having the second wavelength and the infrared radiation 14c having the third wavelength. Here, the synchronization signal generating circuit 28 generates the synchronization signal in a manner synchronized with the alternating current of the commercial power supply 16. The driving signals are respectively supplied from the driver circuit 26 to the first infrared radiation illuminant 23, the second infrared radiation illuminant 24 and the third infrared radiation illuminant 25 in this sequence in response to the leading edge or rise of the synchronization signal. The illuminating period of the first infrared radiation illuminant 23, the second infrared radiation illuminant 24 and the third infrared radiation illuminant 25 corresponds to one period of the commercial power supply 16. The infrared radiations 14a, 14b, 14c reflect from the object to the night vision image capturing apparatus 13 respectively during the corresponding illuminating periods. The reflected infrared radiations 14a, 14b, 14c are imaged on the imaging device 31 through a lens, not depicted.

The night vision image capturing apparatus 13 captures the images of the infrared radiations 14a, 14b, 14c. The red color pixels 32, the green color pixels 33 and the blue color pixels 34 respectively output voltages corresponding to the intensities of the infrared radiations 14a, 14b, 14c. The magnitude of the voltages of the individual pixels 32, 33, 34 forms the intensity distribution for the respective infrared radiations 14a, 14b, 14c. In this case, the synchronization signal generating circuit 42 generates the synchronization signal in a manner synchronized with the alternating voltage of the commercial power supply 16. The imaging device 31 captures images in response to the leading edge or rise of the synchronization signal. The capturing period of the imaging device 31 corresponds to one period of the commercial power supply 16. Since the synchronization signal generating circuits 28, 42 are configured to generate the synchronization signal based on the common alternating voltage, the capturing action of the imaging device 31 is synchronized with the switchover of the infrared radiations 14a, 14b, 14c. The capturing periods of the imaging device 31 always coincides with any of the illuminating periods of the infrared radiation illuminants 23, 24, 25.

The infrared discriminating circuit 39 compares the first signal and the second signal with each other for the individual images. The voltage of the red color pixel 32 and the voltage of the blue color pixel 34 are detected in a manner synchronized with the synchronization signal. The ratio is calculated of the first signal to the second signal. If the ratio is larger than a predetermined threshold, the infrared discriminating circuit 39 labels the image as the image resulting from the infrared radiation 14a having the first wavelength. The image synthesis processing circuit 37 assigns the red color of the display colors to the labeled image. The intensity distribution of the infrared radiation 14a having the first wavelength is converted into the intensity distribution of the red color. The image synthesis processing circuit 37 then assigns the blue color of the display colors to the subsequent image. The intensity distribution of the infrared radiation 14b having the second wavelength is converted into the intensity distribution of the blue color. The image synthesis processing circuit 37 thereafter assigns the green color of the display colors to the further subsequent image. The intensity distribution of the infrared radiation 14c having the third wavelength is converted into the intensity distribution of the green color. The intensity distribution of the red color, the intensity distribution of the blue color and the intensity distribution of the green color are superimposed on one another so as to generate a color image.

Any one of the red color image, the green color image and the blue color image is updated at periods of the alternating current in response to the corresponding one of the infrared radiations 14a, 14b, 14c. The updated color image is combined with the non-updated color images resulting from the infrared radiations 14a, 14b, 14c having the other wavelengths, so that a color image is generated. The encoder 38 converts the image signals of the color images into the composite signals for displaying equipment. The composite signals are supplied to the display unit 15. The color images of the object are displayed on the screen of the display unit 15 in a relatively natural tone.

The inventor has observed a change in the relative sensitivity ratio between the first signal and the second signal depending on the wavelength of the infrared radiations 14a, 14b, 14c. Accordingly, when the relative sensitivity ratio between the first signal and the second signal exceeds the predetermined threshold at the infrared discriminating circuit 39, the reception timing can be discriminated for the infrared radiation 14a having the first wavelength. Since the infrared radiations 14a, 14b, 14c are received in the predetermined sequence, the discrimination of the reception timing of the infrared radiation 14a having the first wavelength results in determination of the reception timings for all the infrared radiations 14a, 14b, 14c. Even when a direct control line is omitted between the infrared radiating apparatus 12 and the night vision image capturing apparatus 13, the red color, the blue color and the green color can reliably be related to the images of the infrared radiation 14a having the first wavelength, the images of the infrared radiation 14b having the second wavelength and the images of the infrared radiation 14c having the third wavelength.

The infrared radiating apparatus 12 and the night vision image capturing apparatus 13 receive the electric power from the outlets 19, 21, respectively, during their operations. The outlets 19, 21 enable the supply of the electric power of the identical phase not only to the night vision image capturing apparatus 13 but also to the infrared radiating apparatus 12. The capturing timings of the imaging device 31 can be synchronized with the switchover of the infrared radiations 14a, 14b, 14c having the different wavelengths. Synchronization can be accomplished without a direct control line between the infrared radiating apparatus 12 and the night vision image capturing apparatus 13. Accordingly, the infrared radiating apparatus 12 and the night vision image capturing apparatus 13 can be placed at remote locations from each other without any restrictions for installation and arrangements. Any supplementary infrared radiating apparatus 12 and/or night vision image capturing apparatus 13 may be added into the night vision image capturing system 11 in a facilitated manner.

The night vision image capturing apparatus 13 assigns the red color as one of the display colors to the image signals resulting from the infrared radiation 14a having the first wavelength. The blue color is assigned as one of the display colors to the image signals resulting from the infrared radiation 14b having the second wavelength longer than the first wavelength. The green color is assigned as one of the display colors to the image signals resulting from the infrared radiation 14c having the third wavelength longer than the second wavelength. These assignments contribute to generation of color images in a natural tone as compared with the other sets of assignments. Alternatively, the red color may be assigned to the image signals resulting from the infrared radiation 14a having the first wavelength, the green color may be assigned to the image signals resulting from the infrared radiation 14b having the second wavelength, the blue color may be assigned to the image signals resulting from the infrared radiation 14c having the third wavelength.

The shorter the wavelength of the infrared radiation gets, the larger the relative sensitivity ratio (=output of the red color pixel/output of the blue color pixel) becomes between the output voltage of the red color pixel 32 and the output voltage of the blue color pixel 34. On the other hand, as the wavelength of the infrared radiation gets longer than a predetermined length, the output voltages of the red color pixel 32, the green color pixel 33 and the blue color pixel 34 get equal to one another. In other words, the relative sensitivity ratio gets to "1". Accordingly, the comparison of the voltage between the red color and the blue color enables a reliable discrimination of the reception timing of the infrared radiation 14a having the first wavelength. Alternatively or additionally, the comparison of the voltage between the red color and the green color, in place of the blue color, also enables discrimination of the reception timing of the infrared radiation 14a having the first wavelength.

The night vision image capturing system 11 may employ oscillators in place of the synchronization signal generating circuits 28, 42. Any quartz crystal oscillator may be employed as the oscillator, for example. A frequency divider may be combined with the quartz crystal oscillator. The oscillators may generate local synchronization signals for the infrared radiating apparatus 12 and the night vision image capturing apparatus 13. If oscillators having a predetermined frequency are incorporated into the infrared radiating apparatus 12 and the night vision image capturing apparatus 13, respectively, the period of the switchover of the infrared radiations 14a, 14b, 14c coincides with the period of the capture of the images. If the timing of a change is derived for the ratio of the sensitivity between the red color pixel 32 and the blue color pixel 34, the timing is discovered for the beginning of the infrared radiation 14a having the first wavelength or the beginning of the infrared radiation 14b having the second wavelength. The red color, the blue color and the green color as the display colors can in this manner be assigned to the images resulting from the infrared radiations 14a, 14b, 14c, respectively. In this case, the infrared discriminating circuit 39 is preferably configured to compare the first signal and the second signal with each other in a period sufficiently shorter than the period for the switchover and the capture of the images.

The night vision image capturing system 11 may be utilized as a security camera system. The night vision image capturing apparatus 13 in the security camera system may function as a day/night camera capable of receiving a visible radiation to capture images in the daytime and of receiving a visible radiation and an infrared radiation to capture images in the nighttime. An infrared cut filter may be combined with the imaging device 31 so as to realize the day/night camera, for example. The infrared cut filter serves to cut off the infrared radiations directed toward the imaging device 31 during the capture of images. As a result, the individual red color pixels 32 output the voltage corresponding to the intensity of the red light, the individual green color pixels 33 output the voltage corresponding to the intensity of the green light, and the individual blue color pixels 34 output the voltage corresponding to the intensity of the blue light. A single capturing action possibly results in generation of a color image. In this case, the infrared cut filter is removed during the night vision image capturing action. The infrared cut filter may removably be disposed in an optical path between the lens and the imaging device 31. A driving mechanism may be connected to the infrared cut filter for insertion and withdrawal of the infrared cut filter.

All examples and conditional language recited herein are intended for pedagogical purposes to aid the reader in understanding the invention and the concept contributed by the inventor to furthering the art, and are to be construed as being without limitation to such specifically recited examples and conditions, nor does the organization of such examples in the specification relate to a showing of the superiority and inferiority of the invention. Although the embodiments of the present inventions have been described in detail, it should be understood that the various changes, substitutions, and alterations could be made hereto without departing from the spirit and scope of the invention.

An imaging device includes pixels configured to sequentially output image signals for an infrared radiation having a first wavelength, an infrared radiation having a second wavelength and an infrared radiation having a third wavelength. A first pixel has the sensitivity to a first color of a primary color and outputting a first signal in response to reception of the infrared radiation having the shortest wavelength of the first wavelength, the second wavelength and the third wavelength. A second pixel has the sensitivity to a second color of the primary color and outputting a second signal in response to the reception of the infrared radiation having the shortest wavelength. A discriminating circuit is configured to compare the first signal and the second signal with each other to discriminate a reception timing of an infrared radiation having a selected wavelength in response to a relative sensitivity ratio.

## Claims

1. A night vision image capturing apparatus (13) comprising:
an imaging device (31) including pixels (32, 33, 34) configured to sequentially receive an infrared radiation (14a) having a first wavelength, an infrared radiation (14b) having a second wavelength and an infrared radiation (14c) having a third wavelength and to output an image signal for the infrared radiation (14a) having the first wavelength, an image signal for the infrared radiation (14b) having the second wavelength and an image signal for the infrared radiation (14c) having the third wavelength, the pixels including a first pixel (32) and a second pixel (34), the first pixel (32) having sensitivity to a first color of a primary color and outputting a first signal in response to reception of the infrared radiation (14a) having a shortest wavelength of the first wavelength, the second wavelength and the third wavelength, the second pixel (34) having sensitivity to a second color of the primary color and outputting a second signal in response to the reception of the infrared radiation (14a) having the shortest wavelength; and
a discriminating circuit (39) configured to compare the first signal and the second signal with each other to discriminate a reception timing of an infrared radiation (14a) having a selected wavelength among the first wavelength, the second wavelength and the third wavelength in response to a relative sensitivity ratio.

2. The night vision image capturing apparatus (13) according to claim 1, further comprising:
a controlling circuit (41) configured to supply a driving signal to the imaging device (31) based on electric power having a predetermined frequency supplied from a commercial power supply (16); and
an image synthesis processing circuit (37) configured to assign display colors to the image signals in a predetermined sequence in a manner synchronized with the predetermined frequency of the electric power.

3. The night vision image capturing apparatus (13) according to claim 2, wherein red is assigned as one of the display colors to the image signal for the infrared radiation (14a) having the first wavelength, blue is assigned as one of the display colors to the image signal for the infrared radiation (14b) having the second wavelength longer than the first wavelength, and green is assigned as one of the display colors to the image signal for the infrared radiation (14c) having the third wavelength longer than the second wavelength.

4. The night vision image capturing apparatus according to any of the preceding claims, wherein the first color is red and the second color is blue or green.

5. An infrared radiating apparatus (12) comprising:
a first illuminant (23) emitting an infrared radiation (14a) having a first wavelength;
a second illuminant (24) emitting an infrared radiation (14b) having a second wavelength;
a third illuminant (25) emitting an infrared radiation (14c) having a third wavelength; and
a controller circuit (27) configured to switch over emissions of the infrared radiation (14a) having the first wavelength, the infrared radiation (14b) having the second wavelength and the infrared radiation (14c) having the third wavelength in a predetermined sequence in a manner synchronized with a frequency signal having a predetermined frequency.

6. The infrared radiating apparatus (12) according to claim 5, further comprising a driver circuit (26) configured to supply driving signals, respectively, to the first illuminant (23), the second illuminant (24) and the third illuminant (25) based on electric power as the frequency signal supplied from a commercial power supply (16).

7. A night vision image capturing system (11) comprising:
an infrared radiating apparatus (12); and
a night vision image capturing apparatus (13), wherein
the infrared radiating apparatus (12) includes:
a first illuminant (23) emitting an infrared radiation (14a) having a first wavelength;
a second illuminant (24) emitting an infrared radiation (14b) having a second wavelength;
a third illuminant (25) emitting an infrared radiation (14c) having a third wavelength; and
a controller circuit (27) configured to switch over emissions of the infrared radiation (14a) having the first wavelength, the infrared radiation (14b) having the second wavelength and the infrared radiation (14c) having the third wavelength in a predetermined sequence in a manner synchronized with a frequency signal having a predetermined frequency, wherein
the night vision image capturing apparatus (13) includes:
an imaging device (31) including pixels (32, 33, 34) configured to sequentially receive the infrared radiation (14a) having the first wavelength, the infrared radiation (14b) having the second wavelength and the infrared radiation (14c) having the third wavelength in a manner synchronized with the frequency signal having the predetermined frequency and to output an image signal for the infrared radiation (14a) having the first wavelength, an image signal for the infrared radiation (14b) having the second wavelength and an image signal for the infrared radiation (14c) having the third wavelength, the pixels including a first pixel (32) and a second pixel (34), the first pixel (32) having sensitivity to a first color of a primary color and outputting a first signal in response to reception of the infrared radiation (14a) having a shortest wavelength of the first wavelength, the second wavelength and the third wavelength, the second pixel (34) having sensitivity to a second color of the primary color and outputting a second signal in response to the reception of the infrared radiation (14a) having the shortest wavelength; and
a discriminating circuit (39) configured to compare the first signal and the second signal with each other to discriminate a reception timing of an infrared radiation (14a) having a selected wavelength among the first wavelength, the second wavelength and the third wavelength in response to a relative sensitivity ratio.
